# EUROPEAN PATENT SPECIFICATION

(11) **EP 2 644 913 B1**
(45) Date of publication and mention of the grant of the patent: **30.10.2019**
(21) Application number: 13160302.9
(22) Date of filing: 21.03.2013
(51) Int. Cl.: F16B 41/00

(54) **Assembly method using retaining tool**
Montageverfahren unter Verwendung eines Rückhaltewerkzeuges
Procédé d'assemblage utilisant un outil de maintien

(30) Priority: 27.03.2012 GB 201205329
(43) Date of publication of application: 02.10.2013
(73) Proprietor: Nissan Motor Manufacturing (UK) Ltd., Cranfield Bedfordshire MK43 0DB (GB)
(72) Inventor: Lopez Ortiz, Jose Luis, Barcelona 08040 (ES); Lopez Ortiz, Andres, Barcelona 08040 (ES)

(56) References cited:
- WO-A1-01/56841
- WO-A1-2008/104740
- DE-B- 1 143 364
- DE-U1- 9 318 947
- GB-A- 2 262 767
- SU-A1- 1 751 480
- US-A- 4 908 245

## Description

The present invention relates to an assembly method using a retaining tool.

During automotive assembly processes, automotive components are often bolted together. In some instances, it is necessary to mount an intermediate element, such as a bush, washer, bearing, spacer or spring, onto each bolt. Sometimes the intermediate elements have a tendency to slide off the bolts, particularly where there is significant play between the intermediate element and the bolt. This can present difficulties during assembly, such as the loss of intermediate elements, incorrect connection between components, loads not being spread properly, and bearing surfaces not being provided. A significant amount of time can be wasted searching for and/or replacing lost intermediate elements. Furthermore, when assembling the automotive components, it usually requires at least two assembly personnel to collate the components, and to ensure that the intermediate elements do not fall off the bolts. This is considered to lack efficiency. Alternatively, an additional assembly step can be undertaken, to fixedly attach the intermediate elements to one of the automotive components prior to connecting the components together. This adds to assembly time, increases cost, and therefore is not an optimised solution.

For example, a gusset, which is used to space a catalytic converter from an engine, is connected to an engine block by four bolts in some vehicles. A bush is mounted on each of the bolts and is welded to the gusset. This prevents the bushes from falling off the bolts during the assembly process, and enables the assembly process to be undertaken by one person only. However, welding is a costly and relatively time consuming process; and the gusset requires additional treatments subsequent to welding before it can be attached to the engine block. Welding can also lead to cracking and corrosion; and is therefore not a desirable way of solving this problem.

WO2006/014740 discloses the use of bolt clips that are fixedly attached to a vehicle running board, and are arranged to engage vehicle mounting bolts; thereby securing the running board to the vehicle. During assembly, the bolt clips are permanently attached to the running board. The clips each include a bore with ferrules arranged along the bore, the ferrules being arranged to receive and engage respective bolts. While the bolt clips provide an alternative to welding, they introduce new material to the running board; which adds cost and weight to the vehicle. It is also necessary to assemble one clip to the running board for each fixing bolt. This is a laborious and error-prone assembly process.

Similar problems can occur when connecting components together by bolts, and/or other similar fasteners, in other industries; particularly where a plurality of fasteners and intermediate assembly elements must be assembled.

US4,908,245 discloses a plastic shim which is placed between two metal components to take up tolerances, then left in place. Because it is made of plastic, it will deform if used with washers; and will deform and/or melt if installed adjacent to a hot vehicle exhaust. Accordingly, the present invention seeks to mitigate at least one of the above-mentioned problems, or to at least provide an alternative assembly method using a retaining tool. According to the invention, there is provided an assembly method for connecting first and second components together; including: providing the first and second components, at least two threaded fasteners and at least one intermediate assembly element for each fastener; mounting the intermediate assembly elements onto the threaded fasteners, mounting a retaining tool comprising a handle onto the threaded fasteners, and temporarily retaining the intermediate assembly elements on the threaded fasteners using the retaining tool; then connecting the first and second components together using the threaded fasteners; characterized by: removing the retaining tool from the threaded fasteners in a direction that is transverse to a longitudinal axis of a fastener while the threaded fasteners are in a partially tightened state; and fully tightening the threaded fasteners after the retaining tool has been removed.

Advantageously, the retaining tool may include first and second engagement members that are spaced apart from one another, thereby defining a slot for receiving part of each threaded fastener, said slot being open at one end; said tool also including a handle; the arrangement being such that the retaining tool is mountable onto the threaded fasteners, and is removable therefrom, in a direction that is transverse to a longitudinal axis of each fastener, said fasteners being externally threaded. Thus, the retaining tool is arranged to releaseably engage the threaded fasteners. The tool is attached to the threaded fasteners by an assembly worker to enable the worker to manoeuvre the assembly components to their correct positions for assembly without the possibility of the intermediate assembly elements falling off the threaded fasteners, since the first and second engagement members abut against the intermediate assembly elements, thereby limiting their relative movement with respect to the fasteners in the longitudinal direction. The worker can remove the retaining tool after the bolts have been partially inserted into an assembly component - for example, an engine cylinder block. Thus what was previously a two worker job can be performed by a single worker, without having to permanently attach the intermediate assembly elements to one of the assembly components.

Advantageously, the retaining tool can be mounted onto the fasteners - and removed therefrom - in any direction that is transverse to the longitudinal axes of the threaded fasteners; which axes would usually be parallel. Preferably the retaining tool can be mounted onto, and is removable from, the fasteners in any direction within an angle of ±30 degrees from a direction that is substantially perpendicular to the longitudinal axes of the threaded fasteners, preferably within ±20 degrees, more preferably ±15 degrees, and more preferably still ±10 degrees. Most preferably the tool can be mounted onto, and is removable from, the fasteners in a direction that is substantially perpendicular to the longitudinal axes of the fasteners. The angle at which the tool can be mounted onto, and removed from, the threaded fasteners is largely determined by the pitch of the fasteners and the amount of play between the threads and the engagement members.

Advantageously, the tool can include at least one further engagement member. This can provide a second slot, for example between the first and further engagement members, or between the second and further engagement members. Advantageously, the second slot can be arranged substantially parallel to the first slot. The or each further engagement member enables the retaining tool to retain an intermediate assembly element on at least one further threaded fastener. Advantageously, the retaining tool can include a plurality of further engagement members. Advantageously, each further engagement member can provide a further slot to accommodate additional threaded fasteners. Advantageously, the retaining tool includes a body; and each engagement member comprises a prong that protrudes from the body.

The first and second engagement members can be arranged substantially parallel to one another. This enables the retaining tool to grip the threaded fasteners on parts of the fasteners that are substantially diametrically opposite to one another. It also helps to facilitate accommodating a plurality of threaded fasteners which each have substantially the same dimensions. Advantageously, the or each further engagement member can be arranged substantially parallel with at least one of the first and second engagement members.

If it is necessary to accommodate threaded fasteners that have different dimensions, particularly different diameters, pairs of the engagement members can be inclined to one another, and/or include a curved portion. Additionally, or alternatively, at least one of the engagement members can include a stepped portion. Advantageously, respective parts of the stepped engagement members can be arranged substantially parallel to one another.

At least the first and second engagement members can be spaced apart by a distance that is greater than or equal to a diameter of a core of the threaded fasteners, and is less than or equal to the outer diameters of the threads along at least part of their lengths, and preferably along substantially their entire lengths. (For clarity, the core of a threaded fastener is its radially innermost part, which is not cut into by the thread). This ensures that the threads interfere with the retaining tool, and thereby prevents the tool from moving longitudinally along the threaded fasteners. Advantageously, the first and second engagement members are spaced apart by a distance that is substantially equal to a minor diameter of the threaded fasteners along at least part of their lengths, and preferably along substantially their entire lengths. This ensures a snug fit between the fasteners and the tool. Advantageously the distance between a further engagement member and one of the first and second engagement members and/or an additional further engagement member can be greater than or equal to a diameter of a core of the threaded fasteners, and is less than or equal to the outer diameter of the threads along at least part of their lengths, and preferably along substantially their entire lengths.

The tool is arranged to accommodate at least two threaded fasteners within the slot, for example spaced along the length of the slot. This minimizes the number of retaining tools required. It is also easier to fit one tool to two fasteners than two tools to two fasteners; once the tool is engaged with the thread on the first fastener, the tool is translated along its longitudinal axis until it touches the second fastener. At this point, only a slight rotational correction will be required to engage the second fastener; as opposed to the translational and rotational orientations which would be required to fit a second, independent tool. Furthermore, where each tool is designed to contact only one fastener, components to be joined (and any corresponding assembly jigs) must be designed so as to permit tool access from various angles; so that multiple tools do not interfere with each other. This may inhibit, for example, the addition of a stiffening flange or rib. A single tool for multiple fasteners reduces the number of angles or sides from which tool access is required. This gives greater design freedom for the components to be joined together.

Finally, a tool is more firmly held in place when it engages a plurality of threaded fasteners; as this assists the retaining function. Typically, this multiple engagement is achieved by selecting appropriate lengths for the first and second engagement members. Typically the lengths of the engagement members are at least 20mm, preferably at least 40mm, and more preferably still at least 60mm. Typically, the lengths of the engagement members are less than or equal to 250mm, preferably less than 200mm, and more preferably still less than 150mm. The lengths of the engagement members in part determines the number of threaded fasteners that the tool can accommodate in one slot.

Preferably at least the first and second engagement members have substantially equal lengths. The or each further engagement member can be substantially equal in length to at least one of the first and second engagement members.

Advantageously the thickness of at least a part of at least one of the engagement members, and preferably each of the engagement members, is sized to enable each engagement member so arranged to slide into a valley formed by two adjacent thread teeth on the threaded fasteners. Advantageously the thickness of the whole body can be sized to enable each engagement member to slide into a valley formed by two adjacent thread teeth. Typically the thickness of each engagement member, at least at a thread engaging part, is at least 0.1mm, preferably at least 0.2mm and more preferably still at least 0.3mm. Typically the thickness is less than or equal to 2.0mm, preferably 1.5mm and more preferably still 1.0mm. In many practicable embodiments the thickness will be around 0.4mm to 0.6mm.

Advantageously at least some of the engagement members lie in substantially the same plane. At least the first and second engagement members can lie in substantially the same plane. The or each further engagement member can lie in the same plane as at least one of the first and second engagement members. This provides a thin overall profile to the tool. Advantageously at least part of the retaining tool can be flexible. At least a part of each engagement member can be flexible.

Advantageously at least part of the retaining tool can be resilient. At least a part of each engagement member can be resilient.

Advantageously at least part of the retaining tool can be substantially rigid. Advantageously at least a part of each engagement member can be substantially rigid.

At least the engagement members can include a metal, such as steel or aluminium; and/or a plastics material such as ABS. The retaining tool body can be made from metal and/or a plastics material. The body can be formed from sheet material. The retaining tool can be cut, stamped or moulded; and may be of composite construction.

The tool can include a concave formation that connects the first and second engagement members together. Advantageously the concave formation is substantially semi-circular in plan, and has a diameter that is substantially equal to the minor diameter of the screw thread. The concave formation limits the relative movement between the first and second engagement members and a first threaded fastener in the direction of insertion. A similar concave portion can be provided between one of the first and second engagement members and a further engagement member. A similar concave portion can be provided between pairs of further engagement members.

According to the invention, the tool comprises a handle. The handle may be arranged substantially parallel with the first and second engagement members. The handle may protrude from the body in a direction that is substantially opposite to the direction in which the engagement members protrude from the body.

Advantageously, the internal surface of at least one of the engagement members can have a profile that is substantially complementary to the threaded fastener; for example, a substantially V-shaped tooth.

Advantageously, at least one of the first, second and further engagement members can include a tapered and/or rounded portion at its leading, or open, end. This helps the retaining tool to be inserted into the screw thread.

The threaded fasteners can comprise bolts, such as bolts in the size range M2 to M24.

The first and second assembly components are preferably first and second automotive components. The first component can comprise an engine (which would generally be partly assembled); and the second component can comprise a gusset. The gusset may comprise a bracket and/or a mounting. At least one of the first and second components can include through holes arranged to receive the threaded fasteners. At least one of the first and second components can include internally threaded holes to receive the threaded fasteners. The first and second components can include more than two holes, each arranged to receive a respective threaded fastener.

The assembly can include more than two threaded fasteners, at least two of which have intermediate assembly elements mounted thereon. Advantageously each intermediate assembly element can comprise one of a bearing element such as a bush, a spring element, a spacer, and a load spreading element such as a washer.

The threaded fasteners each have a longitudinal axis; and can be arranged such that the longitudinal axes are arranged substantially parallel to one another. Advantageously, the threaded fasteners can be arranged in rows and/or columns. This arrangement helps the retaining tool to engage a plurality of threaded fasteners.

The assembly method can use a plurality of retaining tools arranged according to any configuration described herein. Such a plurality of tools may be joined together, for example by a bracket, link, or chain; effectively forming a single tool. This assists organization of the workplace where tools of different sizes are used. Tools of different sizes may be colour-coded to differentiate them.

The method can include providing more than two threaded fasteners and intermediate assembly elements.

The method can include providing a second retaining tool arranged according to any configuration described herein and temporarily retaining further intermediate assembly elements on further threaded fasteners using the second retaining tool.

The method can include providing at least two further threaded fasteners, at least two further intermediate assembly elements, and optionally at least one further retaining tool arranged according to any configuration described herein.

An embodiment of the invention will now be described, by way of example only, with reference to the drawings, in which:
Figure 1 is a plan view of a retaining tool for use in a method in accordance with the invention;
Figure 2 is a plan view of the retaining tool of Figure 1, in use;
Figure 3 is a cross-sectional view of the retaining tool of Figure 2 along the line A-A;
Figure 4 shows nomenclature used in connection with a screw thread; and
Figures 5a to 5d show diagrammatically the retaining tool of Figure 1 being used in

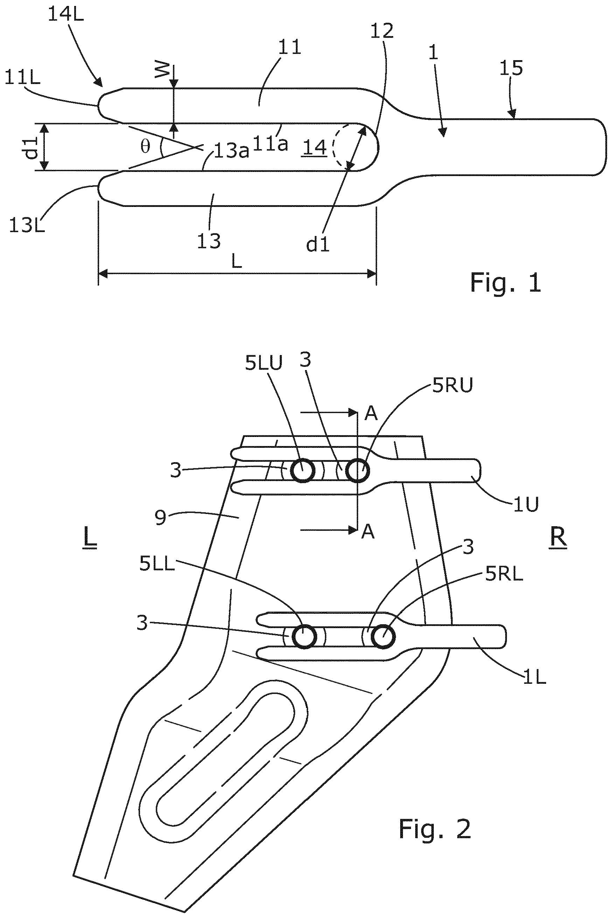

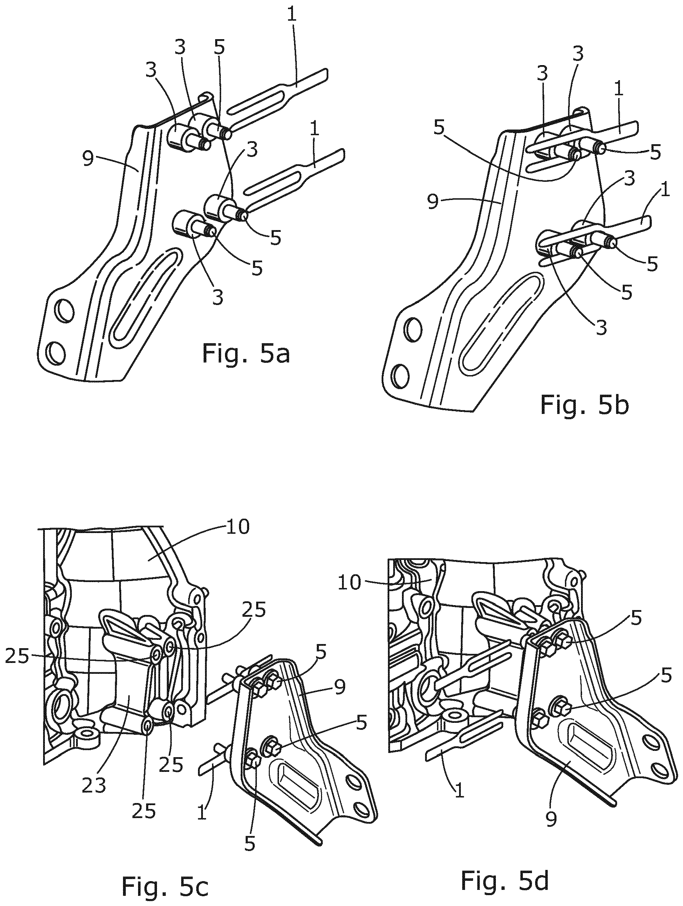

Figures 5a to 5d show diagrammatically the retaining tool of Figure 1 being used in an automotive assembly process.

Figure 1 shows a plan view of a retaining tool 1 for use in a method in accordance with the invention.

Figure 2 shows a pair of the retaining tools 1 in use. Each retaining tool 1 holds a pair of bushes 3 onto a pair of bolts 5. The bolts 5 are mounted in holes 7 formed in the body of a gusset 9. The gusset 9 is used to space a catalytic converter (not shown) from an engine 10 (see Figures 5c and 5d).

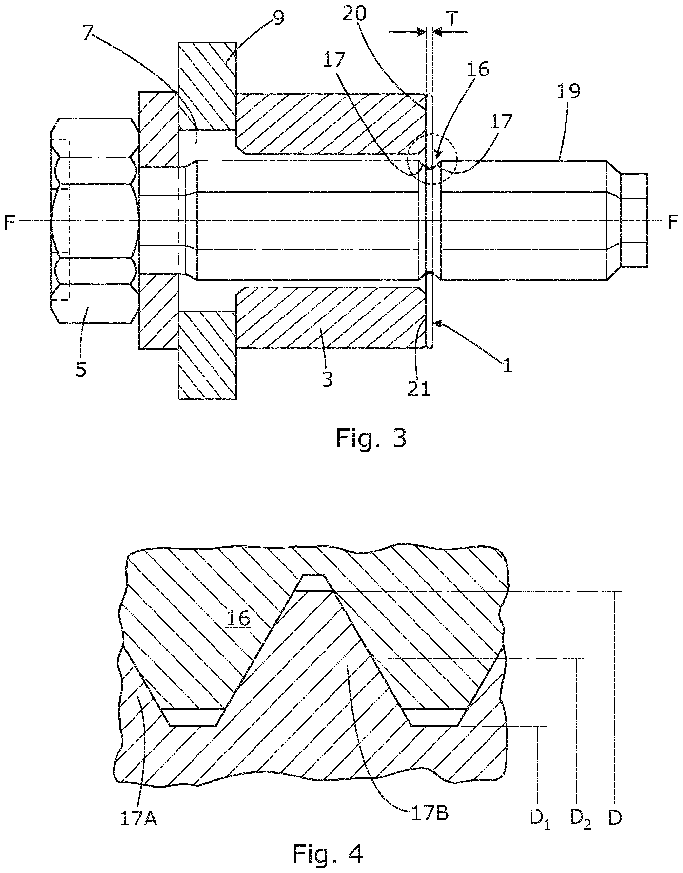

Each retaining tool 1 includes a body that has a shape similar to a tuning fork. The retaining tool 1 includes first and second prongs 11, 13, and a handle 15. There is a slot 14 with an open end 14L between the prongs. The retaining tool 1 has a thickness (T, Fig. 3) typically in the range 0.1mm to 2mm; and preferably in the range 0.4mm to 0.6mm. The retaining tool 1 has a small thickness T so that the first and second prongs 11, 13 can fit into the valleys 16 formed between two respective adjacent teeth 17 in the threads of bolts 5. This is illustrated in Figure 3 (other parts of the thread 19 have been omitted for clarity). Axis F-F in Figure 3 represents a longitudinal axis of the fastener.

The first and second prongs 11, 13 are arranged substantially parallel to one another in a longitudinal direction (see Figure 1), or at least their internal faces 11a, 13a are so arranged. This enables the retaining tool 1 to accommodate a first bolt 5 along substantially the full length of the prongs 11, 13. Since the first and second prongs 11, 13 are arranged substantially parallel to one another, they each engage the bolts 5 at points that are arranged substantially diametrically opposite to one another. This provides a good grip.

The first and second prongs 11, 13 are spaced apart by a distance that is substantially equal to the minor diameter D₁ of the external screw thread 19 (see Figure 4). The distance D₁ between the first and second prongs 11, 13 is dependent on the size of the bolts 5 onto which the tool is to be mounted. Typically, D₁ is in the range 5mm to 20mm; but it can be any suitable size.

This arrangement enables the tool 1 to slide onto the cores of the bolts 5, from a transverse direction, such that a part of each prong 11, 13 fits snugly into a valley 16 between two adjacent teeth 17 of each thread, and part of each prong 11, 13 protrudes above the teeth 17. The arrangement is such that the longitudinal axis of the tool 1 is arranged substantially orthogonally to the longitudinal axis of each bolt 5.

The teeth 17 prevent the tool 1 from moving along the longitudinal axis of each bolt 5. The prongs 11, 13 engage each bush 3, and act to limit its movement along the longitudinal axis of each bolt 5. Therefore the retaining tool 1 provides a stop for preventing bushes 3 from falling from bolts 5 during an assembly process. It is desirable to select teeth 17 that are located close to the bushes 3 to limit the movement of the bushes 3 along the bolts 5. Tool 1 also holds bolts 5 onto gusset 9 during assembly.

Tool 1 can be removed from the bolts 5 by sliding the tool in a direction that is substantially opposite to the direction in which it was mounted onto the bolts 5. Therefore the retaining tool provides a temporary retaining function. This is advantageous since it does not suffer from the problems associated with permanently fixing the bushes (and similar elements) to the assembly components mentioned in the introductory section.

Where the first and second prongs 11, 13 are connected together, the body is rounded and has a substantially semi-circular profile 12, the diameter of which is substantially equal to the minor diameters D₁ of the bolt threads 19. The profile 12 accommodates a first bolt 5, and limits further relative movement between the first bolt 5 and the tool 1 in the insertion direction.

Each prong 11, 13 includes a tapered and/or rounded leading edge 11L, 13L. The tapers together subtend an angle θ which is typically in the range 10° to 60°. The purpose of the rounded and/or tapered parts 11L, 13L is to enable the retaining tool 1 to slide more easily onto the bolts 5.

Edges 11L, 13L are called the leading edge (or end) because they meet each threaded fastener first during installation of the retaining tool. The open leading end 14L of slot 14 corresponds to this convention. Conversely, semi-circular profile 12 is at the trailing end or edge of the slot 14 located between prongs or engagement members 11, 13.

The length L of each of the first and second prongs 11, 13 is substantially equal. Prong length L is determined by the number of bolts 5 to be accommodated by the prongs 11, 13 in a single retaining operation, and the spacing therebetween. The length L of the prongs is such that the retaining tool 1 can accommodate the diameter of at least two bolts 5; and preferably at least three bolts 5. Preferably the length L is selected to accommodate between two and four bolts 5. Typically the prongs 11, 13 have a length L in the range 20mm to 250mm.

The width W of each prong 11, 13 is typically in the range 2mm to 15mm, and preferably in the range 4mm to 10mm. The width W of each prong 11, 13 defines the retaining surface (20,21, Fig. 3) that abuts against the bushes 3 and prevents said bush from sliding off the bolts 5. The width W is selected to provide an appropriate retaining function for the application.

The handle 15 enables the user to grip the retaining tool 1, and to slide it into place; and conversely, to remove it from the bolts 5 when the operation is completed.

The retaining tool 1 is preferably made from a metal, such as steel or aluminium; or a plastics material, such as ABS. The retaining tool 1 can be manufactured by, for example, stamping and/or cutting the tool out of sheet material. Additionally, or alternatively, the tool 1 can be moulded. In preferred embodiments, the body is made from a single piece of material, which provides a very simple and cheap construction. The body may also have a composite construction.

Figure 2 shows two sides of the gusset, L for left and R for right. The four bolts used to fasten the gusset to an engine (not shown) are designated 5RU (right upper), 5RL (right lower), 5LU (left upper), and 5LL (left lower). The advantages of holding at least two bolts and respective bushes on each tool will now be described. Instead of using four tools 1, which would have to be fitted at four angles so that they did not block each other, a first tool 1U can be aligned first with bolt 5RU. It is then relatively easy to slide first tool 1U over bolt 5LU. Similarly, it is easier to slide a second tool 1L over bolts 5RL and 5LL, than to instal two shorter tools 1 from left side L and right side R respectively. Tools 1U and 1L may be identical, or may be adapted to their individual purposes, as required.

It can be seen from Figure 2 that tools 1U and 1L have been installed from the right hand side R of the gusset 9. This offers freedom of design for gusset 9 and for any assembly jigs used, in that a flange or wall can be used on side L without obstructing tool access. If a single tool 1 was used for each bolt 5LL, 5LU, 5RU, and 5RL, tool access would have to be provided from side L.

An automotive assembly process using two of the retaining tools 1 according to the invention, will now be described, with reference to Figures 5a to 5d. The assembly process is the connection of a gusset 9 to an engine block 23. The gusset 9 is connected to the engine block 23 by four bolts 5. The bolts 5 are arranged substantially parallel to one another, and are arranged in an array.

The bolts 5 are inserted into holes 7 formed in the gusset 9. A bush 3 is placed onto each of the bolts 5 (see Figure 5a). One of the retaining tools 1 is then slid onto the upper two bolts 5, from a transverse direction, to hold the bushes 3 in place on their respective bolts 5; and the other retaining tool 1 is slid across the lower two bolts 5 to hold their bushes 3 in place on their respective bolts 5. It will be appreciated by the skilled person that in Figures 5a to 5c, the retaining tools have been slid across the bolts 5 from a sideways direction. However, the tools 1 can be mounted onto the bolts 5 in a vertical direction. In this case, one of the retaining tools 1 is used to hold in place the bushes 3 on the left hand side bolts 5. Another tool 1 holds bushes 3 in place on the right hand side bolts 5. It will be appreciated that both the sideways and vertical directions are substantially orthogonal to the longitudinal axes of the bolts. Furthermore, it will be appreciated that in practice the retaining tools 1 may be mounted on the bolts 5 so that they are inclined to the longitudinal axes of the bolts 5. The angle is largely dependent on the pitch of the thread 19. If the pitch is very small the angle is likely to be close to 90 degrees, however if the pitch is slack the angle of inclination can be ± 30 degrees, or more away from an axis that is perpendicular to the longitudinal axes of the bolts 5. Thus the tool is arranged to slide onto, and be removed from, the bolts 5 in a direction that is transverse to the longitudinal axes of the bolts 5; rather than being screwed onto the thread 19 in a manner similar to a nut.

The operator then moves the gusset 9 into place such that the bolts 5 are aligned with internally threaded holes 25 formed in the engine block 23. The operator uses a power tool or a pneumatic tool (not shown) to partially tighten the bolts 5. When the bolts 5 are partially inserted into the holes 25, the operator removes the retaining tools 1; and then completes the operation by fully tightening the bolts 5.

The process ensures that the bushes 3 do not fall off the bolts 5 during the assembly operation. This obviates the need to weld the bushes to the gusset 9 prior to the assembly operation. It also obviates the subsequent processes that are required post-welding, and prevents corrosion and/or cracking that can be associated with the welding operations. The inventors have found that the operation reduces the cost of producing a car by around 25 Euros. When it is considered that many millions of cars are made each year, this leads to a substantial saving overall.

Furthermore, the process can be completed by a single assembly worker.

It will be appreciated by the skilled person that modifications can be made to the above embodiment, that fall within the scope of the invention. For example, the retaining tool 1 can be used to hold other elements onto a bolt 5 such as, for example, a spring, washer, spacer or other type of bearing. The tool 1 can be used in other automotive assembly processes, and has application in non-automotive assembly processes.

The two retaining tools 1 shown in Figures 5a to 5d can be connected together such that they form a single retaining tool 1. For example, they can be made as a single moulding. In this arrangement, the retaining tool can include a spacer part to space the pairs of prongs apart to account for the spacing between rows or columns of bolts 5. Alternatively, two or more retaining tools can be connected by a flexible connector, such as a cord or chain; or by an arm connected to each tool.

Additionally, or alternatively, the retaining tool 1 can include at least one further prong to accommodate at least one additional bolt 5. Thus, the retaining tool can include at least two prongs 11, 13; however, it may include any practicable number of prongs 11, 13.

The inner sides 11a, 13a of the prongs can include a profile that is substantially complementary to the threads 19 into which the retaining tool is inserted. Effectively, this means that the prongs 11, 13 can include an internal tooth that mates with the external threads on the bolts 5.

The tool 1 can be adapted such that only those parts that mate with the screw threads 19 of the bolts have a thickness T that is sufficiently thin to enable the tool to fit between two teeth 17 on a screw thread. The remainder of the body can have a thickness T of any suitable size. However, the uniformly thin embodiment described above is an exemplary embodiment, since the material usage is low, and it can be constructed very easily.

The embodiment shown is used to hold bushes 3 onto bolts 5 that each have the same diameter. If different diameter bolts 5 are used, one retaining tool can be used to accommodate different diameter bolts 5 by adapting the prongs, for example to include a stepped portion; or to arrange the prongs so that they are inclined to one another, and/or include a curved portion.

## Claims

1. An assembly method for connecting first and second components (23, 9) together, including:
providing the first and second components, at least two threaded fasteners (5) and at least one intermediate assembly element (3) for each fastener;
mounting the intermediate assembly elements (3) onto the threaded fasteners (5); **characterized by**
mounting a retaining tool (1) comprising a handle (15) onto the threaded fasteners and temporarily retaining the intermediate assembly elements (3) on the threaded fasteners (5) using the retaining tool (1);
then connecting the first and second components (23, 9) together using the threaded fasteners (5);
removing the retaining tool (1) from the threaded fasteners in a direction that is transverse to a longitudinal axis (F-F) of a fastener (5), while the threaded fasteners (5) are in a partially tightened state;
and fully tightening the threaded fasteners (5) after the retaining tool (1) has been removed.

2. An assembly method according to claim 1, wherein the retaining tool (1) is arranged to include first and second engagement members (11, 13) that are spaced apart from one another thereby defining a slot (14) for receiving part of each threaded fastener (5), said slot being open at one end (14L); said tool also including a handle (15); the arrangement being such that the retaining tool (1) is mountable onto the threaded fasteners (5), and is removable therefrom, in a direction that is transverse to a longitudinal axis (F-F) of each fastener, said fasteners being externally threaded.

3. An assembly method according to claim 2, wherein the first and second engagement members (11, 13) in the retaining tool (1) are arranged substantially parallel to one another.

4. An assembly method according to claim 2 or claim 3, wherein the first and second engagement members (11, 13) in the retaining tool (1) are spaced apart by a distance (D₁) that is greater than or equal to the diameter of a core of the threaded fastener (5), and is less than or equal to the outer diameter (D) of the thread along at least part of the lengths (L) of said engagement members (11, 13), and preferably along substantially their entire lengths.

5. An assembly method according to any preceding claim, wherein the thickness (T) of at least a part of at least one of the engagement members (11, 13) in the retaining tool (1) is sized to enable the engagement member to slide into a valley (16) formed by two adjacent thread teeth (17A, 17B) on said threaded fastener (5).

6. An assembly method according to any preceding claim, wherein the retaining tool (1) includes at least one further slot (14).

7. An assembly method according to any preceding claim, wherein the first and second assembly components (23, 9) are first and second automotive components.

8. An assembly method according to any preceding claim, wherein the threaded fasteners (5) are arranged such that their longitudinal axes (F-F) are substantially parallel to one another.

9. An assembly method according to any preceding claim, using a plurality of retaining tools (1).

10. An assembly method according to any one of claims 1 to 8, including providing at least two further threaded fasteners (5), at least two further intermediate assembly elements (3), and at least one further retaining tool (1).

## Patentansprüche

1. Montageverfahren zum Verbinden einer ersten und einer zweiten Komponente (23, 9), einschließlich Folgendem:
Bereitstellen der ersten und der zweiten Komponente, wenigstens zweier mit einem Gewinde versehener Befestigungsmittel (5) und wenigstens eines dazwischenliegenden Montageelements (3) für jedes Befestigungsmittel;
Anbringen der dazwischenliegenden Montageelemente (3) an den mit einem Gewinde versehenen Befestigungsmitteln (5); charakterisiert durch Folgendes:
Anbringen eines Haltewerkzeugs (1), das einen Griff (15) umfasst, an den mit einem Gewinde versehenen Befestigungsmitteln und vorübergehendes Halten der dazwischenliegenden Montageelemente (3) auf den mit einem Gewinde versehenen Befestigungsmitteln (5) unter Verwendung des Haltewerkzeugs (1);
dann Miteinanderverbinden der ersten und der zweiten Komponente (23, 9) unter Verwendung der mit einem Gewinde versehenen Befestigungsmittel (5);
Entfernen des Haltewerkzeugs (1) von den mit einem Gewinde versehenen Befestigungsmitteln in einer Richtung, die quer zu einer Längsachse (F-F) eines Befestigungsmittels (5) verläuft, während sich die mit einem Gewinde versehenen Befestigungsmittel (5) in einem teilweise angezogenen Zustand befinden;
und vollständiges Anziehen der mit einem Gewinde versehenen Befestigungsmittel (5), nachdem das Haltewerkzeug (1) entfernt wurde.

2. Montageverfahren nach Anspruch 1, wobei das Haltewerkzeug (1) angeordnet ist, um ein erstes und ein zweites Eingriffsglied (11, 13) zu beinhalten, die voneinander beabstandet sind, wobei dadurch ein Schlitz (14) zum Aufnehmen eines Teils jedes mit einem Gewinde versehenen Befestigungsmittels (5) definiert wird, wobei der Schlitz an einem Ende offen ist (14L); wobei das Werkzeug ebenso einen Griff (15) beinhaltet; wobei die Anordnung derart ist, dass das Haltewerkzeug (1) auf den mit einem Gewinde versehenen Befestigungsmitteln (5) angebracht werden kann und davon in einer Richtung, die quer zu einer Längsachse (F-F) jedes Befestigungsmittels verläuft, entfernbar ist, wobei die Befestigungsmittel mit einem Außengewinde versehen sind.

3. Montageverfahren nach Anspruch 2, wobei das erste und das zweite Eingriffsglied (11, 13) in dem Haltewerkzeug (1) im Wesentlichen parallel zueinander angeordnet sind.

4. Montageverfahren nach Anspruch 2 oder 3, wobei das erste und das zweite Eingriffsglied (11, 13) in dem Haltewerkzeug (1) um einen Abstand (D₁) voneinander beabstandet sind, der wenigstens der Durchmesser eines Kerns des mit einem Gewinde versehenen Befestigungsmittels (5) ist und höchstens der Außendurchmesser (D) des Gewindes entlang wenigstens eines Teils der Längen (L) der Eingriffsglieder (11, 13) und vorzugsweise entlang im Wesentlichen ihrer gesamten Längen ist.

5. Montageverfahren nach einem der vorhergehenden Ansprüche, wobei die Dicke (T) wenigstens eines Teils wenigstens eines der Eingriffsglieder (11, 13) in dem Haltewerkzeug (1) bemessen ist, um zu ermöglichen, dass das Eingriffsglied in ein Tal (16) gleiten kann, das von zwei benachbarten Gewindezähnen (17A, 17B) an dem mit einem Gewinde versehenen Befestigungsmittel (5) ausgebildet ist.

6. Montageverfahren nach einem der vorhergehenden Ansprüche, wobei das Haltewerkzeug (1) wenigstens einen weiteren Schlitz (14) beinhaltet.

7. Montageverfahren nach einem der vorhergehenden Ansprüche, wobei die erste und die zweite Montagekomponente (23, 9) eine erste und eine zweite Automobilkomponente sind.

8. Montageverfahren nach einem der vorhergehenden Ansprüche, wobei die mit einem Gewinde versehenen Befestigungsmittel (5) derart angeordnet sind, dass ihre Längsachsen (F-F) im Wesentlichen parallel zueinander sind.

9. Montageverfahren nach einem der vorhergehenden Ansprüche, das mehrere Haltewerkzeuge (1) verwendet.

10. Montageverfahren nach einem der Ansprüche 1 bis 8, einschließlich des Bereitstellens wenigstens zweier weiterer mit einem Gewinde versehener Befestigungsmittel (5), wenigstens zweier weiterer dazwischenliegender Montageelemente (3) und wenigstens eines weiteren Haltewerkzeugs (1).

## Revendications

1. Procédé d'assemblage pour relier des premier et second composants (23, 9) ensemble, consistant à :
fournir les premier et second composants, au moins deux fixations filetées (5) et au moins un élément d'assemblage intermédiaire (3) pour chaque fixation ;
monter les éléments d'assemblage intermédiaires (3) sur les fixations filetées (5) ; **caractérisé par**
le montage d'un outil de retenue (1) comprenant une poignée (15) sur les fixations filetées et le maintien temporaire des éléments d'assemblage intermédiaires (3) sur les fixations filetées (5) en utilisant l'outil de retenue (1) ;
puis relier les premier et second composants (23, 9) ensemble à l'aide des fixations filetées (5) ; retirer l'outil de retenue (1) des fixations filetées dans une direction transversale par rapport à un axe longitudinal (F-F) d'une fixation (5), tandis que les fixations filetées (5) sont dans un état partiellement serré ;
et serrer au maximum les fixations filetées (5) après avoir retiré l'outil de retenue (1).

2. Procédé d'assemblage selon la revendication 1, dans lequel l'outil de retenue (1) est agencé pour comporter des premier et second éléments de mise en prise (11, 13) qui sont espacés l'un de l'autre, définissant ainsi une fente (14) pour recevoir une partie de chaque fixation filetée (5), ladite fente étant ouverte à une extrémité (14L) ; ledit outil comportant également une poignée (15) ; l'agencement étant tel que l'outil de retenue (1) est montable sur les fixations filetées (5) et peut en être retiré, dans une direction transversale par rapport à un axe longitudinal (F-F) de chaque fixation, lesdites fixations étant filetées extérieurement.

3. Procédé d'assemblage selon la revendication 2, dans lequel les premier et second éléments de mise en prise (11, 13) dans l'outil de retenue (1) sont agencés de manière pratiquement parallèles l'un à l'autre.

4. Procédé d'assemblage selon la revendication 2 ou la revendication 3, dans lequel les premier et second éléments de mise en prise (11, 13) dans l'outil de retenue (1) sont espacés d'une distance (D₁) qui est supérieure ou égale au diamètre d'un noyau de la fixation filetée (5), et est inférieure ou égale au diamètre extérieur (D) du filetage sur au moins une partie des longueurs (L) desdits éléments de mise en prise (11, 13), et de préférence sur pratiquement toute leur longueur.

5. Procédé d'assemblage selon l'une quelconque des revendications précédentes, dans lequel l'épaisseur (T) d'au moins une partie d'au moins un des éléments de mise en prise (11, 13) dans l'outil de retenue (1) est dimensionnée pour permettre à l'élément de mise en prise de glisser dans un creux (16) formé par deux dents filetées adjacentes (17A, 17B) sur ladite fixation filetée (5).

6. Procédé d'assemblage selon l'une quelconque des revendications précédentes, dans lequel l'outil de retenue (1) comporte au moins une fente supplémentaire (14).

7. Procédé d'assemblage selon l'une quelconque des revendications précédentes, dans lequel les premier et second composants d'assemblage (23, 9) sont des premier et second composants automobiles.

8. Procédé d'assemblage selon l'une quelconque des revendications précédentes, dans lequel les fixations filetées (5) sont agencées de telle sorte que leurs axes longitudinaux (F-F) sont pratiquement parallèles les uns aux autres.

9. Procédé d'assemblage selon l'une quelconque des revendications précédentes, utilisant une pluralité d'outils de retenue (1).

10. Procédé d'assemblage selon l'une quelconque des revendications 1 à 8, comportant la fourniture d'au moins deux fixations filetées supplémentaires (5), d'au moins deux autres éléments d'assemblage intermédiaires (3) et d'au moins un autre outil de retenue (1).
